(19) Europäisches Patentamt
European Patent Office
Office européen des brevets

(11) **EP 4 759 769 A1**

(12) **DEMANDE DE BREVET EUROPEEN**

(43) Date de publication:
**17.06.2026 Bulletin 2026/25**

(21) Numéro de dépôt: **25219292.7**

(22) Date de dépôt: **28.11.2025**

(51) Classification Internationale des Brevets (IPC):
**B66F 9/075** *(2006.01)* **B62D 11/24** *(2006.01)*

(52) Classification Coopérative des Brevets (CPC):
**B66F 9/07563; B66F 9/07568;** B62D 11/24

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **16.12.2024 FR 2414206**

(71) Demandeur: **MANITOU BF
44150 Ancenis (FR)**

(72) Inventeurs:
• **LECLERC, Anthony
44150 ANCENIS (FR)**
• **BIJU-DUVAL, Rémi
44150 ANCENIS (FR)**

(74) Mandataire: **Ipsilon
Europarc - Bat B7
3, rue Edouard Nignon
44300 Nantes (FR)**

(54) **ENGIN DE MANUTENTION DE CHARGE A CONDUCTEUR ACCOMPAGNANT**

(57) Engin (1) de manutention de charge à conducteur accompagnant comprenant un châssis (2) avec une partie en forme de U couché, des fourches (5) mobiles en montée et en descente disposées entre les branches (4) du U, un organe de commande de direction (6) sous forme d'un timon, un organe (7) de fourniture d'une consigne de vitesse de déplacement au sol de l'engin (1), des roues de support du châssis (2) comprenant deux roues arrière (81, 82) disposées au niveau des branches (4) du U et une roue avant (9) directrice. Les roues arrière (81, 82) sont équipées chacune d'un système électrique moteur d'entraînement en rotation, l'engin (1) comprend un capteur (11) de la position angulaire de la roue avant (9) et une unité (12) de pilotage des systèmes moteurs configurée pour commander les systèmes moteurs à une vitesse en fonction des données fournies par le capteur (11) de la position angulaire de la roue avant (9).

[Fig. 1]

Fig 1

EP 4 759 769 A1

**Description**

La présente invention concerne un engin de manutention de charge à conducteur accompagnant.

Elle concerne en particulier un engin de manutention de charge à conducteur accompagnant comprenant un châssis comprenant au moins une partie en forme de U couché avec l'âme du U considérée comme formant l'avant du châssis, des fourches montées mobiles en montée et en descente disposées entre les branches du U, un organe de commande de direction sous forme d'un timon et/ou d'un système de radiocommande, un organe de fourniture d'une consigne de vitesse de déplacement au sol de l'engin, des roues aptes à supporter le châssis dit roulant, lesdites roues comprenant au moins deux roues dites arrière disposées au niveau des branches du U et une roue avant disposée à la verticale ou en avant de l'âme du U pris par rapport au sens avant arrière du châssis, ladite roue avant étant montée à rotation autour d'un axe directionnel dit vertical parallèle à la direction de déplacement en montée et en descente des fourches pour former une roue directrice, l'organe de commande de direction étant actif sur la roue avant.

Un tel engin de manutention de charge est connu. Dans un tel engin à conducteur accompagnant, il est considéré que le sens marche avant de l'engin correspond au sens de déplacement de l'engin dans lequel la charge apte à être portée par les fourches de l'engin est derrière le conducteur. Les conducteurs de tels engins de manutention de charge sont à la recherche de solutions permettant d'améliorer la traction de l'engin pour faciliter le passage de l'engin sur tout type de terrain y compris à l'état chargé. De tels engins de manutention de charge ne doivent pas être confondus avec les engins de manutention de charge à conducteur embarqué tels que décrits dans le brevet GB2619934.

Un but de l'invention est de proposer un engin de manutention de charge du type précité dont la traction est améliorée sans nuire à la facilité de direction et aux possibilités de braquage de l'engin de manutention de charge.

A cet effet, l'invention a pour objet un engin de manutention de charge à conducteur accompagnant comprenant un châssis comprenant au moins une partie en forme de U couché avec l'âme du U considérée comme formant l'avant du châssis, des fourches montées mobiles en montée et en descente disposées entre les branches du U, un ou plusieurs organes de commande de direction, au moins l'un des organes de commande de direction étant sous forme d'un timon, un organe de fourniture d'une consigne de vitesse de déplacement au sol de l'engin, des roues aptes à supporter le châssis dit roulant, lesdites roues comprenant au moins deux roues dites arrière disposées au niveau des branches du U et une roue avant disposée à la verticale ou en avant de l'âme du U pris par rapport au sens avant arrière du châssis, ladite roue avant étant montée à rotation autour d'un axe directionnel dit vertical parallèle à la direction de déplacement en montée et en descente des fourches pour former une roue directrice, l'organe de commande de direction étant actif sur la roue avant, caractérisé en ce que les roues arrière sont des roues motrices équipées chacune d'un système électrique moteur d'entraînement en rotation, en ce que l'engin comprend un capteur d'un paramètre représentatif de la position angulaire de la roue avant directrice autour de l'axe directionnel et en ce que l'engin comprend une unité de pilotage des systèmes électriques moteurs d'entraînement en rotation des roues arrière configurée pour commander les systèmes électriques moteurs d'entraînement en rotation des roues arrière à une vitesse identique ou différente en fonction au moins des données fournies par le capteur d'un paramètre représentatif de la position angulaire de la roue avant directrice autour de l'axe directionnel

Le fait de commander la vitesse de rotation des roues arrière motrices au moins en fonction de la position angulaire de la roue avant directrice permet d'optimiser la vitesse de chacune des roues arrière pour aider à la direction de l'engin pour le conducteur accompagnant l'engin. Il en résulte une facilité de conduite de l'engin pour le conducteur accompagnant.

Selon un mode de réalisation de l'invention, l'unité de pilotage des systèmes électriques moteurs d'entraînement en rotation des roues arrière est configurée pour recevoir une consigne de vitesse de déplacement au sol de l'engin de l'organe de fourniture d'une consigne de vitesse de déplacement au sol de l'engin et pour commander les systèmes électriques moteurs d'entraînement en rotation des roues arrière à une vitesse identique ou différente en fonction au moins des données fournies par le capteur d'un paramètre représentatif de la position angulaire de la roue avant directrice autour de l'axe directionnel et de ladite consigne de vitesse de déplacement au sol de l'engin. Ainsi, la conduite de l'engin est optimisée sur l'intégralité de la plage de consignes de vitesse de déplacement au sol de l'engin.

Selon un mode de réalisation de l'invention, les roues arrière comprennent une première roue arrière et une deuxième roue arrière, la vitesse du système électrique moteur d'entraînement en rotation de la première roue arrière est définie par la formule $V81=V.(\cos(a)+\sin(a).d/(2y))$, la vitesse du système électrique moteur d'entraînement en rotation de la deuxième roue arrière est définie par la formule $V82 = V.(\cos(a) -\sin(a).d/(2y))$, V correspond à la consigne de vitesse de déplacement au sol de l'engin exprimée en mètre par seconde, d correspond à la voie définie par les roues arrière, y à l'empattement de l'engin, la voie et l'empattement étant exprimés en mètre, et a à l'angle, inférieur ou égal à 90° en valeur absolue, ouvert en direction de la première roue ou de la deuxième roue et formé par le plan de rotation de la roue avant avec l'axe longitudinal du châssis pris suivant la direction avant/arrière du châssis, cet angle étant, par convention, positif à l'état ouvert en direction de la première roue et négatif à l'état ouvert en direction de la deuxième roue.

Selon un mode de réalisation de l'invention, la vitesse des systèmes électriques moteurs d'entraînement en rotation des roues arrière est identique et le sens de rotation des roues arrière est identique lorsque le plan de rotation de la roue avant est parallèle à l'axe longitudinal du châssis pris suivant la direction avant/arrière du châssis, c'est-à-dire lorsque l'angle formé par le plan de rotation de la roue avant avec l'axe longitudinal du châssis pris suivant la direction avant/arrière du châssis est égal à 0°. Ainsi, lorsque l'axe de rotation de la roue avant, c'est-à-dire l'axe autour duquel la roue avant tourne pour un déplacement au sol, est orthogonal aux branches du U du châssis ou à l'axe longitudinal du châssis pris suivant la direction avant /arrière du châssis, les roues arrière tournent à la même vitesse et dans le même sens de rotation.

Selon un mode de réalisation de l'invention, la vitesse des systèmes électriques moteurs d'entraînement en rotation des roues arrière est identique et le sens de rotation des roues arrière est inversé d'une roue arrière à l'autre lorsque le plan de rotation de la roue avant est orthogonal à l'axe longitudinal du châssis pris suivant la direction avant/arrière du châssis. Ainsi, la vitesse des systèmes électriques moteurs d'entraînement en rotation des roues arrière est identique et le sens de rotation des roues arrière est inversé d'une roue arrière à l'autre lorsque l'angle, formé par le plan de rotation de la roue avant avec l'axe longitudinal du châssis pris suivant la direction avant/arrière du châssis, est égal en valeur absolue à 90°.

Selon un mode de réalisation de l'invention, la roue avant est une roue motrice et la vitesse d'entraînement en rotation de la roue avant correspond à la consigne de vitesse de déplacement au sol de l'engin de l'organe de fourniture d'une consigne de vitesse de déplacement au sol de l'engin.

Selon un mode de réalisation de l'invention, la roue avant directrice est montée mobile en monte et baisse par rapport au châssis pour, en coopération avec les roues arrière, faire varier l'assiette c'est-à-dire l'inclinaison, du châssis suivant la direction avant/arrière. Cette conception permet de stabiliser la charge lors du déplacement par exemple sur une rampe.

Selon un mode de réalisation de l'invention, l'organe de fourniture d'une consigne de vitesse de déplacement au sol de l'engin est un levier pivotant porté par l'organe de commande de direction.

Selon un mode de réalisation de l'invention, l'engin comprend au moins un attelage à un véhicule tracteur. Cette disposition permet d'atteler aisément un tel engin à un véhicule tracteur pour un transport sur route.

Selon un mode de réalisation de l'invention, l'attelage est couplé de manière amovible ou escamotable au châssis de l'engin.

Selon un mode de réalisation de l'invention, l'attelage est configuré pour être positionné au niveau de la partie arrière du châssis de l'engin.

Selon un mode de réalisation de l'invention, l'engin comprenant plusieurs organes de commande de direction, au moins l'un des organes de commande de direction est un système de radiocommande.

Selon un mode de réalisation de l'invention, l'engin comprend au moins deux roues supplémentaires dites de remorquage disposées entre la roue avant et les roues arrière.

**Brève description des dessins**

L'invention sera bien comprise à la lecture de la description suivante d'exemples de réalisation, en référence aux dessins annexés dans lesquels :

[Fig. 1] représente une vue en perspective d'un engin de manutention de charge conforme à l'invention ;

[Fig. 2] représente une vue de dessus d'un engin de manutention de charge conforme à l'invention ;

[Fig. 3] représente une vue de côté d'un engin de manutention de charge conforme à l'invention ;

[Fig. 4] représente une vue schématique du comportement en termes de vitesse des roues arrière d'un engin se déplaçant en marche arrière à l'état entraîné en rotation de la roue avant suivant une première direction angulaire pour former un angle ouvert en direction de la première roue ;

[Fig. 5] représente une vue schématique du comportement en termes de vitesse, des roues arrière d'un engin se déplaçant en marche arrière à l'état entraîné en rotation de la roue avant suivant une deuxième direction angulaire opposée à la première direction angulaire pour former un angle ouvert en direction de la deuxième roue ;

[Fig. 6] représente une vue schématique du comportement en termes de vitesse des roues arrière d'un engin se déplaçant en marche arrière à l'état entraîné en rotation de la roue avant suivant la première direction angulaire pour former un angle égal à 90° ouvert en direction de la première roue ;

[Fig. 7] représente une vue schématique du comportement en termes de vitesse des roues arrière d'un engin se déplaçant en marche arrière à l'état positionné de la roue avant en ligne droite pour former avec l'axe longitudinal du châssis un angle égal à 0° ;

[Fig. 8] représente une vue schématique du comportement en termes de vitesse des roues arrière d'un engin se déplaçant en marche avant à l'état entraîné en rotation de la roue avant suivant une première direction angulaire pour former un angle ouvert en direction de la première roue ;

[Fig. 9] représente une vue schématique du comportement en termes de vitesse des roues arrière d'un engin se déplaçant en marche avant à l'état entraîné en rotation de la roue avant suivant une deuxième direction angulaire opposée à la première direction angulaire pour former un angle ouvert en direction de la deuxième roue ;

[Fig. 10] représente une vue schématique du comportement en termes de vitesse des roues arrière d'un engin se déplaçant en marche avant à l'état entraîné en rotation de la roue avant suivant la première direction angulaire pour former un angle égal à 90° ouvert en direction de la première roue ;

[Fig. 11] représente une vue schématique du comportement en termes de vitesse des roues arrière d'un engin se déplaçant en marche avant à l'état positionné de la roue avant en ligne droite pour former avec l'axe longitudinal du châssis un angle égal à 0°.

Comme mentionné ci-dessus, l'invention concerne un engin 1 de manutention de charge à conducteur accompagnant encore appelé transpalette ou gerbeur ou chariot élévateur à fourche.

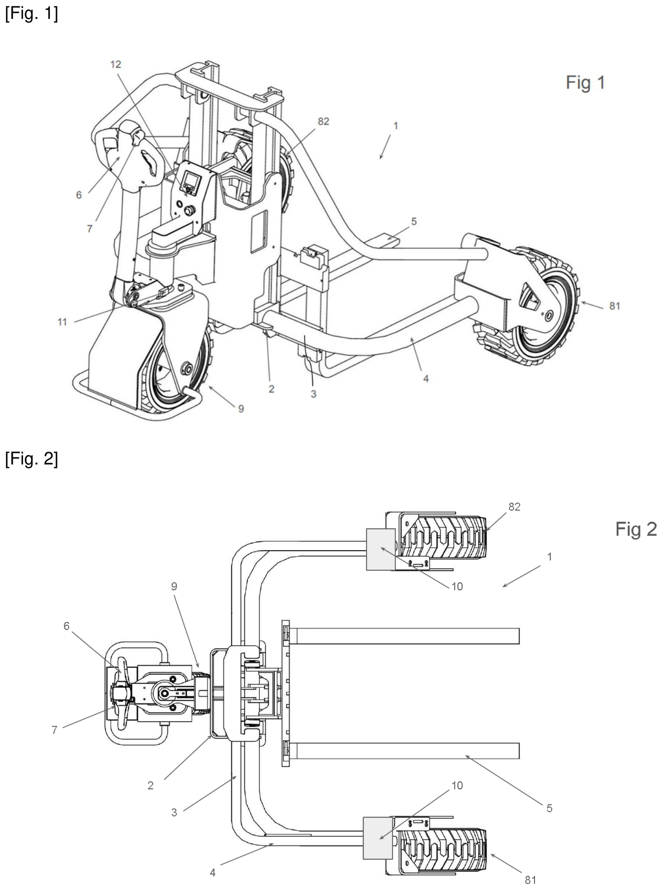

Cet engin 1 comprend un châssis 2 dont un exemple est fourni à la figure 1. Généralement, ce châssis 2 comprend un mât et, à la base du mât, un U couché ouvert en direction de l'arrière de l'engin 1. En effet, le U comprend une âme considérée comme formant l'avant du châssis 2, tandis que les branches du U forment, au niveau de leur extrémité libre, l'arrière du châssis 2. Des fourches 5 sont de manière classique montées mobiles en montée et en descente le long du mât du châssis 2. Ce déplacement peut être commandé à l'aide d'un ou plusieurs actionneurs, tels que des vérins, disposés entre les fourches 5 et le mât. En position basse, ces fourches 5 s'étendent entre les branches 4 du U, comme cela est visible à la figure 2. Ces fourches 5 servent à la manutention d'une charge.

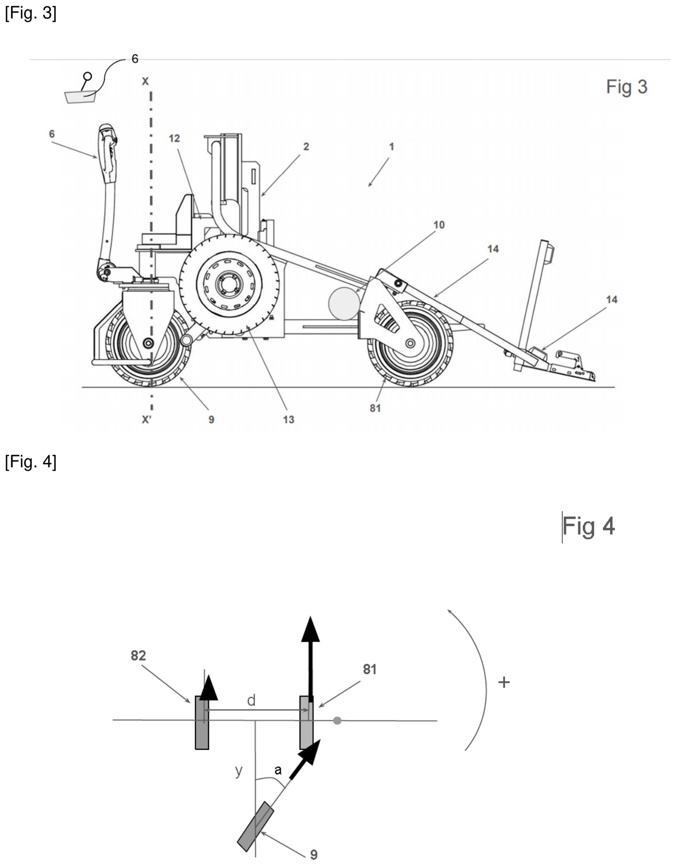

Cet engin 1 de manutention comprend encore au moins un organe de commande de direction 6 qui se présente sous forme d'un timon, comme illustré aux figures 1 et 2. Cet engin 1 de manutention peut comprendre au moins un organe de commande de direction 6 supplémentaire sous forme d'un système de radiocommande comprenant par exemple un boîtier équipé d'un levier pivotant comme illustré à la figure 3. Ces organes de commande de direction sont, lorsque leur nombre est au moins égal à deux, sélectivement activables. Le déplacement du levier suivant la direction avant/arrière du châssis 2 peut permettre de commander le sens de déplacement de l'engin, et suivant la direction gauche/-

droite, la direction de l'engin.

Le châssis 2 roulant est supporté par des roues. Ces roues comprennent au moins une roue avant 9 disposée à la verticale et en avant de l'âme 3 du U pris par rapport au sens avant/arrière du châssis 2, et deux roues arrière 81 et 82 disposées aux extrémités des branches 4 du U du châssis 2.

La roue avant 9 est montée sous l'action de l'organe de commande de direction 6 mobile à rotation autour d'un axe XX' vertical visible à la figure 2, cet axe XX' étant parallèle à la direction de déplacement en montée et en descente des fourches 5. La roue avant 9 forme ainsi une roue directrice capable de tourner sur elle-même sur au moins une partie de la plage angulaire.

L'organe ou l'un des organes de commande de direction 6 qui est un timon se présente sous forme d'un manche pourvu à une extrémité de deux poignées de saisie formant chacune une anse à la manière d'oreilles, et à son extrémité opposée d'une liaison pivot à une chape pivotante de la roue avant 9. La liaison pivot à axe horizontal du manche du timon à la chape pivotante présente un axe pivot transversal à l'axe longitudinal du châssis 2 lorsque la roue avant est parallèle à l'axe longitudinal du châssis pour un déplacement en ligne droite. Cette liaison pivot à axe horizontal permet d'abaisser ou de relever le manche pour plus de confort pour le conducteur de l'engin.

La chape pivotante de la roue avant 9 forme un étrier en U ouvert vers le sol avec les branches du U couplées à l'axe de rotation horizontal pour un déplacement au sol de la roue avant 9. L'ensemble de cette chape et le timon associé est couplé par une liaison pivot au châssis 2. L'axe pivot de cette liaison est l'axe directionnel XX' vertical parallèle à la direction de déplacement en montée et en descente des fourches.

Le plan de rotation de la roue avant 9, qui est orthogonal à l'axe autour duquel tourne la roue avant 9 pour son déplacement au sol, forme avec l'axe longitudinal du châssis 2 pris suivant la direction avant/arrière du châssis 2 un angle au plus égal à 90° en valeur absolue.

Ainsi, l'organe de commande de direction 6 sous forme d'un timon est limité en déplacement pour couvrir, entre ces deux positions extrêmes d'entraînement en déplacement angulaire de la roue avant 9, une plage angulaire d'entraînement en déplacement de la roue avant 9 au plus égale à 180°, soit 90° vers une première direction, par exemple vers la droite, et une rotation d'au plus 90° vers la deuxième direction, par exemple vers la gauche à partir de la position en ligne droite de la roue avant 9, dans laquelle le plan de rotation de la roue avant 9 s'étend parallèlement à l'axe longitudinal du châssis 2.

La roue avant 9 peut être une roue motrice ou non. Lorsque cette roue avant est motrice, elle comprend un système de motorisation, tel qu'un moteur électrique, au niveau de la roue avant pour l'entraînement en rotation de ladite roue avant 9. Les roues arrière 81 et 82 sont, quant à elles, des roues motrices équipées chacune d'un système électrique moteur 10 d'entraînement en rotation.

Par système électrique moteur 10 d'entraînement en rotation d'une roue arrière 81 ou 82, on entend un système électrique moteur 10 d'entraînement en rotation de ladite roue comprenant au moins un moteur électrique.

L'engin 1 comprend encore un organe 7 de fourniture d'une consigne de vitesse de déplacement au sol de l'engin. Cet organe 7 de fourniture d'une consigne de vitesse de déplacement au sol de l'engin 1 peut être formé par un levier pivotant porté par l'organe de commande de direction. Ainsi, dans les figures, cet organe 7 de fourniture d'une consigne de vitesse de déplacement est placé à proximité immédiate des deux poignées de saisie du timon et actionnable par le pouce de l'une des mains du conducteur qui tient l'une des poignées du timon. Dans le cas d'un levier pivotant équipant un boîtier de commande, cette consigne de vitesse peut être fonction du degré d'inclinaison du levier pivotant.

L'engin 1 comprend encore une unité 12 de pilotage. Ladite unité de pilotage se présente sous la forme d'un système électronique et informatique qui comprend par exemple un microprocesseur et une mémoire de travail. Selon un aspect particulier, l'unité de pilotage peut se présenter sous la forme d'un automate programmable. Autrement dit, les fonctions et étapes décrites peuvent être mise en œuvre sous forme de programme informatique ou via des composants matériels (p. ex. des réseaux de portes programmables). En particulier, les fonctions et étapes opérées par l'unité de pilotage ou ses modules peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array, ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application). Il est aussi possible de combiner des parties informatiques et des parties électroniques. Lorsqu'il est précisé que l'unité ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

Cette unité 12 de pilotage est configurée pour recevoir une consigne de vitesse de déplacement au sol de l'engin de l'organe 7 de fourniture d'une consigne de vitesse de déplacement au sol de l'engin 1.

En variante, l'engin 1 de manutention de charge peut être commandé en tout ou rien. Dans ce cas, la consigne de vitesse de déplacement au sol de l'engin est une donnée mémorisée et l'actionnement de l'organe de commande de fourniture d'une consigne de vitesse déclenche la prise en compte de ces données mémorisées.

L'engin 1 comprend encore un capteur 11 d'un paramètre représentatif de la position angulaire de la roue avant 9 directrice autour de l'axe directionnel XX'. Ce capteur 11 peut être formé par une roue codeuse disposée au niveau de la liaison à rotation de l'ensemble organe de commande de direction 6/chape pivotante de la roue avant 9 avec le châssis 2.

Les informations fournies par ce capteur 11 sont adressées à l'unité 12 de pilotage. L'unité 12 de pilotage est configurée pour commander les systèmes électriques moteurs 10 d'entraînement en rotation des roues arrière 81 et 82 à une vitesse identique ou différente en fonction au moins des données fournies par le capteur 11 d'un paramètre représentatif de la position angulaire de la roue avant 9 directrice autour de l'axe directionnel XX'.

L'unité 12 de pilotage des systèmes électriques moteurs 10 d'entraînement en rotation des roues arrière 81, 82 est configurée pour recevoir une consigne de vitesse de déplacement au sol de l'engin de l'organe 7 de fourniture d'une consigne de vitesse de déplacement au sol de l'engin 1, et pour commander les systèmes électriques moteurs 10 d'entraînement en rotation des roues arrière 81, 82 à une vitesse identique ou différente en fonction au moins des données fournies par le capteur 11 d'un paramètre représentatif de la position angulaire de la roue avant 9 directrice autour l'axe directionnel XX' et de ladite consigne de vitesse de déplacement au sol de l'engin 1.

Bien évidemment, l'engin 1 de manutention de charge comprend un organe de commande du sens de direction de déplacement de l'engin en marche avant ou en marche arrière. Cet organe de commande du sens de direction de déplacement peut être couplé à l'organe 7 de fourniture d'une consigne de vitesse de déplacement au sol de l'engin ou être indépendant de ce dernier ou ces derniers.

Dans le cas d'un couplage de l'organe de commande du sens de direction de déplacement en marche avant ou en marche arrière avec l'organe 7 de fourniture d'une consigne de vitesse en de déplacement au sol de l'engin, lorsque l'organe 7 de fourniture d'une consigne de vitesse est un levier pivotant, le sens d'inclinaison dudit levier peut déterminer le sens de déplacement de l'engin choisi.

L'information relative au sens de déplacement est également délivrée à l'unité de pilotage, en sus de la consigne de vitesse.

Lorsque la roue avant 9 est une roue motrice, la vitesse d'entraînement en rotation de la roue avant 9 correspond à la consigne de vitesse de déplacement au sol de l'engin 1 de l'organe de fourniture d'une consigne de vitesse en déplacement au sol de l'engin et le sens d'entraînement en rotation de la roue avant 9 à l'information fournie par l'organe de commande du sens de déplacement en marche avant ou en marche arrière de l'engin 1.

Les roues arrière de l'engin 1 comprennent une première roue arrière 81 et une deuxième roue arrière 82. L'unité de pilotage commande la vitesse de ces roues arrière 81 et 82 en fonction au moins de la géométrie de l'engin 1, et de la consigne de vitesse en déplacement au sol de l'engin si cette dernière n'est pas constante suivant les formules mentionnées ci-dessous.

En effet, la vitesse la vitesse V81 du système électrique moteur 10 d'entraînement en rotation de la première roue arrière 81 est définie par la formule :

V81=V.(cos(a) +sin(a).d/(2y)). La vitesse V82 du système électrique moteur 10 d'entraînement en rotation de la deuxième roue arrière 82 est définie par la formule :

$$V82=V.(cos(a)\ -sin(a)\ .d/(2y)).$$

V correspond à la consigne de vitesse de déplacement au sol de l'engin 1 exprimée en mètre par seconde.

d correspond à la voie définie par les roues arrière 81, 82, c'est-à-dire la distance entre les roues arrière.

y à l'empattement de l'engin 1, c'est-à-dire à la distance entre un axe passant par le centre de rotation des roues arrière à l'état positionné des roues arrière parallèlement à l'axe longitudinal du châssis 2 et un plan perpendiculaire au plan de rotation de la roue avant 9 et passant par l'axe de rotation de déplacement au sol de ladite roue avant 9 à l'état positionné de la roue avant en ligne droite avec son plan de rotation parallèle à l'axe longitudinal du châssis 2. La voie et

l'empattement sont exprimés en mètre.

a correspond à l'angle inférieur ou égal à 90° en valeur absolue, ouvert en direction de la première roue 81 ou de la deuxième roue 82 et formé par le plan de rotation de la roue avant 9 avec l'axe longitudinal du châssis 2 pris suivant la direction avant/arrière du châssis 2. Cet angle a est par convention positif à l'état ouvert en direction de la première roue 81 et négatif à l'état ouvert en direction de la route 82.

Dans les exemples représentés, la première roue 81 est la roue arrière gauche et la deuxième roue 82 est la roue arrière droite de l'engin. Pour simplifier l'application des formules, on suppose, dans les exemples qui suivent, que d est égal à 1,5 m, V est égal 2 m/s et y est égal à 1,2 m.

Ainsi, dans l'exemple de la figure 4 où l'engin est entraîné en déplacement en marche arrière avec une rotation de l'organe de commande de direction correspondant à une rotation de la roue avant 9 vers la première roue arrière depuis la position en ligne droite de la roue avant 9, c'est-à-dire la position dans laquelle le plan de rotation de la roue avant s'étend parallèlement à l'axe longitudinal du châssis 2, l'angle a est voisin de 30°.

Il en résulte un virage de l'engin entraîné en déplacement en marche arrière suivant un sens anti-horaire, c'est-à-dire avec la première roue arrière 81 de l'engin située à l'extérieur du virage, le système électrique moteur 10 d'entraînement en rotation de la première roue arrière 81, qui est entraîné à une vitesse suivant la formule V81=V.(cos.(a)+sin(a).d/(2y)), est entraîné à une vitesse de rotation supérieure au système électrique moteur 10 d'entraînement en rotation de la deuxième roue arrière 82 de l'engin. La deuxième roue arrière 82 est située à l'intérieur du virage et le système électrique moteur 10 d'entraînement en rotation de la deuxième roue arrière 82 est entraîné à une vitesse V82 répondant à la formule V82=V.(cos(a)-sin(a).d/(2y)). Ainsi, a étant égal 30°, V81 est égal à 2,35 m/s et V82 est égal à 1,10 m/s.

On constate donc qu'effectivement V81 est supérieure à V82 comme l'indiquent les flèches en gras à la figure 4.

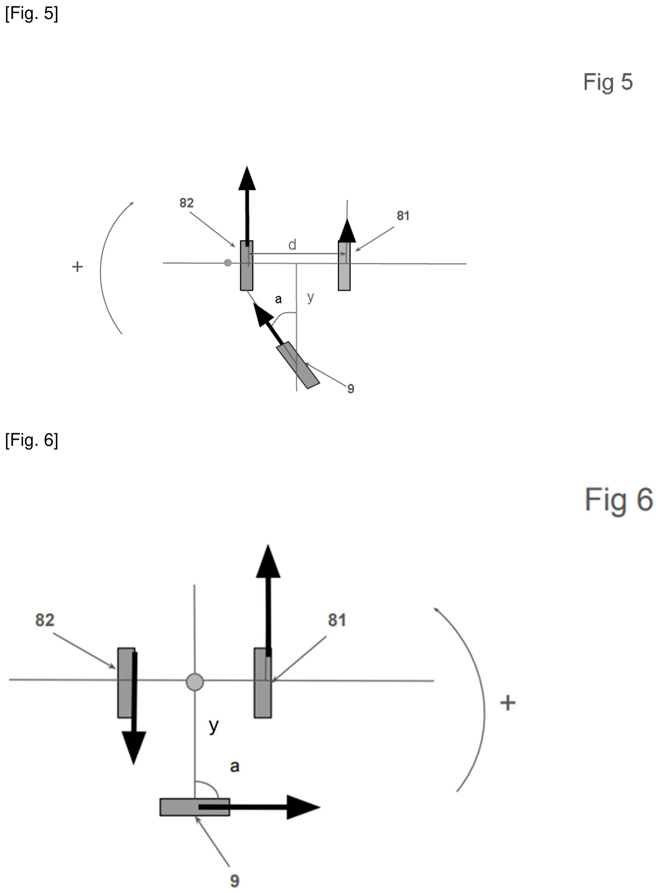

Dans l'exemple de la figure 5, l'engin est entraîné en déplacement en marche arrière en sens horaire, c'est-à-dire avec la deuxième roue située à l'extérieur du virage. En effet, la roue avant 9 est entraînée en déplacement en rotation autour de l'axe directionnel vers la deuxième roue 82 depuis la position en ligne droite de la roue avant 9. Dans ce cas V82 est supérieure à V81, a est égal à -30°, V81 est égal à 1,10 m/s et V82 est égal à 2,35 m/s.

Dans l'exemple de la figure 6 où l'engin est entraîné en déplacement en marche arrière, l'angle a formé par le plan de rotation de la roue avant avec l'axe longitudinal du châssis 2 est, suite à une rotation de la roue avant vers la première roue arrière 81, égal à +90°, ce qui correspond à une position de braquage maximal de l'organe de commande de direction.

Dans ce cas, la vitesse des systèmes électriques moteurs 10 d'entraînement en rotation des roues arrière 81 et 82 est identique, et le sens de rotation des roues arrière 81, 82 est inversé d'une roue arrière à l'autre.

Ainsi, dans l'exemple représenté, sin(a)=1 et cos(a)=0 et donc V81=-V82 avec V81 correspondant à un entraînement en rotation en marche arrière de la première roue 81 et V82 correspondant à un entraînement en rotation en marche avant de la deuxième roue 82.

Bien évidemment, pour une rotation de la roue avant vers la deuxième roue arrière 82 avec un angle a égal à moins 90°, ce que correspond à nouveau à une position de braquage maximal de l'organe de commande de direction, on observe de manière similaire que la vitesse des systèmes électriques moteurs 10 d'entraînement en rotation des roues arrière 81, 82 est identique et le sens de rotation des roues arrière 81, 82 est inversé d'une roue arrière à l'autre. Dans ce cas, sin(a)=-1 et cos(a)=0, et V81=-V82, c'est alors la première roue 81 qui est entraînée en marche avant, la deuxième roue 82 en marche arrière.

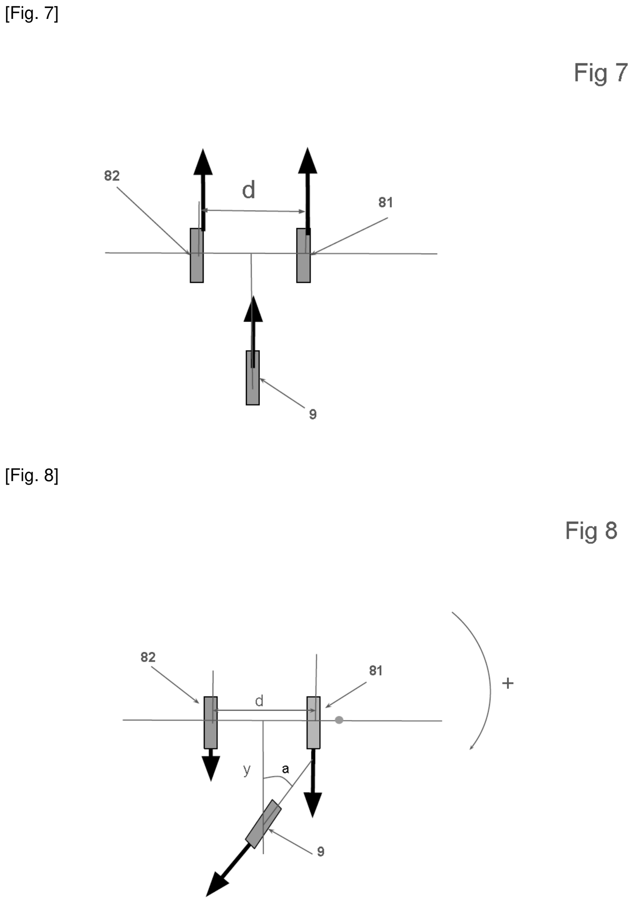

Dans l'exemple de la figure 7 où l'engin est toujours entraîné en déplacement en marche arrière, l'angle a formé par le plan de rotation de la roue avant avec l'axe longitudinal du châssis 2 est égal à 0.

Dans ce cas, les vitesses V81 et V82 des systèmes électriques moteurs 10 d'entraînement en rotation des roues arrière 81 et 82 sont identiques et le sens de rotation des roues arrière 81 et 82 est identique.

Ainsi, dans l'exemple représenté sin(a)=0, cos(a)=1 et donc V81=V82. L'engin 1 se déplace donc en ligne droite en marche arrière.

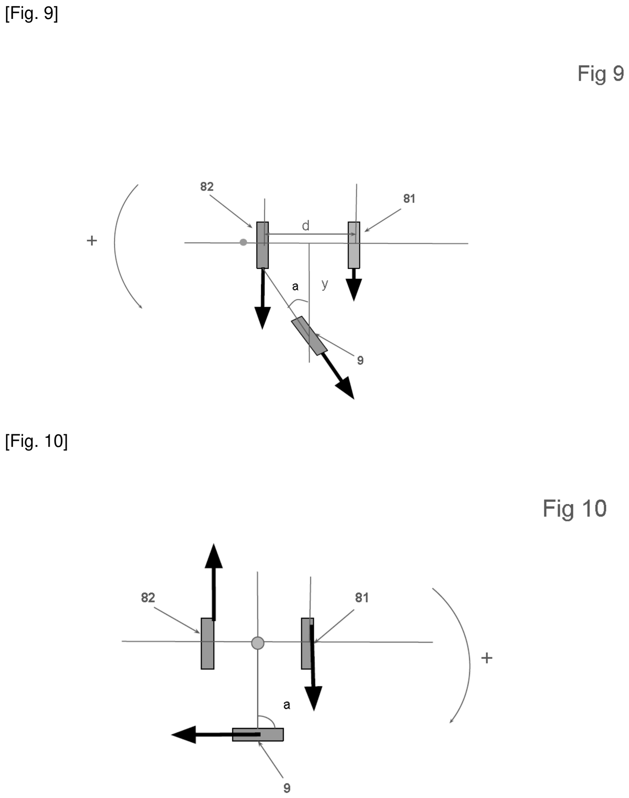

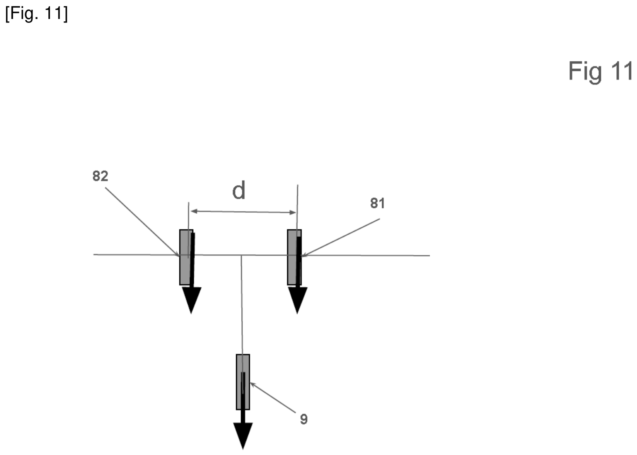

Les figures 8 à 11 illustrent des vues respectivement équivalentes aux figures 4 à 7 avec un sens d'entraînement en rotation en marche avant de l'engin. On constate qu'indépendamment du sens de déplacement en marche avant ou en marche arrière de l'engin, la direction de l'engin demeure facilitée, la roue arrière située à l'intérieur du virage tournant toujours à une vitesse inférieure à la roue arrière située à l'extérieur du virage. A nouveau, les flèches en gras matérialisent les vitesses avec une longueur de flèche différente lorsqu'il existe un différentiel de vitesse en valeur absolue.

Pour parfaire cet engin 1 de manutention de charge, la roue avant 9 directrice peut être montée mobile en monte et baisse par rapport au châssis 2 pour, en coopération avec les roues arrière 81 et 82, faire varier l'assiette, c'est-à-dire l'inclinaison du châssis 2, suivant la direction avant/arrière.

A cet effet, la partie du châssis à laquelle est couplé l'ensemble organe de commande de direction/roue avant peut être montée mobile à coulissement le long d'une autre partie du châssis et entraînée en déplacement avec un actionneur, tel qu'un vérin, non représenté, disposé entre lesdites parties de châssis animées d'un déplacement relatif.

L'engin peut encore comprendre, comme l'illustre la figure 3, au moins deux roues supplémentaires dites de remorquage 13 disposées entre la roue avant et les roues arrière 81 et 82. L'engin peut également comprendre au moins un attelage 14 à un véhicule tracteur. Cet attelage 14 est ici disposé au niveau de l'arrière de l'engin 1 de manutention.

Cet attelage 14 est couplé de manière amovible ou escamotable au châssis 2 de l'engin 1.

Cet attelage 14 permet d'atteler l'engin 1 de manutention de charge à un véhicule tracteur pour faciliter le transport dudit engin 1 de manutention de charge d'un site à un autre. L'attelage peut dans ce cas être formé au moins par une barre d'attelage équipée d'un organe d'attelage comme illustré. Cette barre d'attelage peut être couplée au châssis 2 par une liaison démontable et/ou pivotante.

## Revendications

1. Engin (1) de manutention de charge à conducteur accompagnant comprenant un châssis (2) comprenant au moins une partie en forme de U couché avec l'âme (3) du U considérée comme formant l'avant du châssis (2), des fourches (5) montées mobiles en montée et en descente disposées entre les branches (4) du U, un ou plusieurs organes de commande de direction (6), au moins l'un des organes de commande de direction étant sous forme d'un timon, un organe (7) de fourniture d'une consigne de vitesse de déplacement au sol de l'engin (1), des roues aptes à supporter le châssis (2) dit roulant, lesdites roues comprenant au moins deux roues dites arrière (81, 82) disposées au niveau des branches (4) du U et une roue avant (9) disposée à la verticale ou en avant de l'âme (3) du U pris par rapport au sens avant arrière du châssis (2), ladite roue avant (9) étant montée à rotation autour d'un axe directionnel (XX') dit vertical parallèle à la direction de déplacement en montée et en descente des fourches (5) pour former une roue directrice, l'organe de commande de direction (6) étant actif sur la roue avant (9), **caractérisé en ce que** les roues arrière (81, 82) sont des roues motrices équipées chacune d'un système électrique moteur (10) d'entraînement en rotation, **en ce que** l'engin (1) comprend un capteur (11) d'un paramètre représentatif de la position angulaire de la roue avant (9) directrice autour de l'axe directionnel (XX') et **en ce que** l'engin (1) comprend une unité (12) de pilotage des systèmes électriques moteurs (10) d'entraînement en rotation des roues arrière (81, 82) configurée pour commander les systèmes électriques moteurs (10) d'entraînement en rotation des roues arrière (81, 82) à une vitesse identique ou différente en fonction au moins des données fournies par le capteur (11) d'un paramètre représentatif de la position angulaire de la roue avant (9) directrice autour de l'axe directionnel (XX').

2. Engin (1) de manutention de charge selon la revendication 1, **caractérisé en ce que** l'unité (12) de pilotage des systèmes électriques moteurs (10) d'entraînement en rotation des roues arrière (81, 82) est configurée pour recevoir une consigne de vitesse de déplacement au sol de l'engin (1) de l'organe (7) de fourniture d'une consigne de vitesse de déplacement au sol de l'engin (1) et pour commander les systèmes électriques moteurs (10) d'entraînement en rotation des roues arrière (81, 82) à une vitesse identique ou différente en fonction au moins des données fournies par le capteur (11) d'un paramètre représentatif de la position angulaire de la roue avant (9) directrice autour de l'axe directionnel (XX') et de ladite consigne de vitesse de déplacement au sol de l'engin (1).

**3.** Engin (1) de manutention de charge selon l'une des revendications 1 ou 2, **caractérisé en ce que** les roues arrière (81, 82) comprennent une première roue arrière (81) et une deuxième roue arrière (82), **en ce que** la vitesse (V81) du système électrique moteur (10) d'entraînement en rotation de la première roue arrière (81) est définie par la formule V81=V.(cos(a) +sin(a).d/(2y)), **en ce que** la vitesse (V82) du système électrique moteur (10) d'entraînement en rotation de la deuxième roue arrière (82) est définie par la formule V82 = V.(cos(a) -sin(a) .d/(2y)), **en ce que** V correspond à la consigne de vitesse de déplacement au sol de l'engin (1) exprimée en mètre par seconde, d correspond à la voie définie par les roues arrière (81, 82), y à l'empattement de l'engin (1), la voie et l'empattement étant exprimés en mètre, et a à l'angle, inférieur ou égal à 90° en valeur absolue, ouvert en direction de la première roue (81) ou de la deuxième roue (82) et formé par le plan de rotation de la roue avant (9) avec l'axe longitudinal du châssis (2) pris suivant la direction avant/arrière du châssis (2), cet angle (a) étant, par convention, positif à l'état ouvert en direction de la première roue (81) et négatif à l'état ouvert en direction de la deuxième roue (82).

**4.** Engin (1) de manutention de charge selon la revendication 3, **caractérisé en ce que** la vitesse (V81, V82) des systèmes électriques moteurs (10) d'entraînement en rotation des roues arrière (81, 82) est identique et le sens de rotation des roues arrière (81, 82) est identique lorsque le plan de rotation de la roue avant (9) est parallèle à l'axe longitudinal du châssis (2) pris suivant la direction avant/arrière du châssis (2), c'est-à-dire lorsque l'angle formé par le plan de rotation de la roue avant avec l'axe longitudinal du châssis (2) pris suivant la direction avant/arrière du châssis est égal à 0°.

**5.** Engin (1) de manutention de charge selon l'une des revendications 3 ou 4, **caractérisé en ce que** la vitesse (V81, V82) des systèmes électriques moteurs (10) d'entraînement en rotation des roues arrière (81, 82) est identique et le sens de rotation des roues arrière (81, 82) est inversé d'une roue arrière à l'autre lorsque le plan de rotation de la roue avant (9) est orthogonal à l'axe longitudinal du châssis (2) pris suivant la direction avant/arrière du châssis (2).

**6.** Engin (1) de manutention de charge selon l'une des revendications 1 à 5, **caractérisé en ce que** la roue avant (9) est une roue motrice et **en ce que** la vitesse d'entraînement en rotation de la roue avant (9) correspond à la consigne de vitesse de déplacement au sol de l'engin (1) de l'organe (7) de fourniture d'une consigne de vitesse de déplacement au sol de l'engin.

**7.** Engin (1) de manutention de charge selon l'une des revendications 1 à 6, **caractérisé en ce que** la roue avant (9) directrice est montée mobile en monte et baisse par rapport au châssis (2) pour, en coopération avec les roues arrière (81, 82), faire varier l'assiette, c'est-à-dire l'inclinaison, du châssis (2) suivant la direction avant/arrière.

**8.** Engin (1) de manutention de charge selon l'une des revendications 1 à 7, **caractérisé en ce que** l'organe (7) de fourniture d'une consigne de vitesse de déplacement au sol de l'engin (1) est un levier pivotant porté par l'organe de commande de direction (6).

**9.** Engin (1) de manutention de charge selon l'une des revendications 1 à 8, **caractérisé en ce que** l'engin (1) comprend au moins un attelage (14) à un véhicule tracteur.

**10.** Engin (1) de manutention de charge selon la revendication 9, **caractérisé en ce que** l'attelage (14) est couplé de manière amovible ou escamotable au châssis (2) de l'engin (1).

**11.** Engin (1) de manutention de charge selon l'une des revendications 9 ou 10, **caractérisé en ce que** l'attelage (14) est configuré pour être positionné au niveau de la partie arrière du châssis (2) de l'engin (1).

**12.** Engin (1) de manutention de charge selon l'une des revendications 1 à 11, **caractérisé en ce que** l'engin (1) comprenant plusieurs organes de commande de direction (6), au moins l'un des organes de commande de direction (6) est un système de radiocommande.

**13.** Engin (1) de manutention de charge selon l'une des revendications 1 à 12, **caractérisé en ce que** l'engin (1) comprend au moins deux roues supplémentaires dites de remorquage (13) disposées entre la roue avant (9) et les roues arrière (81, 82).

[Fig. 1]

Fig 1

[Fig. 2]

Fig 2

[Fig. 3]

Fig 3

[Fig. 4]

Fig 4

[Fig. 5]

Fig 5

[Fig. 6]

Fig 6

[Fig. 7]

Fig 7

[Fig. 8]

Fig 8

[Fig. 9]

Fig 9

[Fig. 10]

Fig 10

[Fig. 11]

Fig 11

**EP 4 759 769 A1**

Europäisches Patentamt
European Patent Office
Office européen des brevets

# RAPPORT DE RECHERCHE EUROPEENNE

Numéro de la demande

**EP 25 21 9292**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | GB 2 619 934 A (CARGOTEC ENGINEERING IRELAND LTD [IE]) 27 décembre 2023 (2023-12-27) | 1,2,6 | INV. B66F9/075 B62D11/24 |
| Y | * page 6 - page 11; figures * | 7-11,13 | |
| A | | 3-5 | |
| | ----- | | |
| Y | GB 892 494 A (JOSEPH FRANTISEK SULC) 28 mars 1962 (1962-03-28) * le document en entier * | 7,9-11, 13 | |
| | ----- | | |
| Y | EP 3 233 711 B1 (COMBILIFT [IE]) 31 octobre 2018 (2018-10-31) * alinéa [0048]; figures * | 8 | |
| | ----- | | |
| Y | GB 2 286 806 A (JOHN NATHAN GWYLLIM REES [GB]) 30 août 1995 (1995-08-30) * le document en entier * | 9,10 | |
| | ----- | | |
| Y | US 2022/194465 A1 (KELLER JUERGEN [DE]) 23 juin 2022 (2022-06-23) * alinéa [0056] - alinéa [0101]; figures * | 1,2,6,12 | |
| | ----- | | DOMAINES TECHNIQUES RECHERCHES (IPC) |
| Y | CN 113 697 727 A (SUZHOU PIONEER MATERIAL HANDLING EQUIPMENT & TECH CO LTD) 26 novembre 2021 (2021-11-26) * abrégé; figures * | 1,2,6,12 | B66F |
| | ----- | | |

Le présent rapport a été établi pour toutes les revendications

| Lieu de la recherche | Date d'achèvement de la recherche | Examinateur |
|---|---|---|
| La Haye | 22 avril 2026 | Popescu, Alexandru |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P04C02)

15

**ANNEXE AU RAPPORT DE RECHERCHE EUROPEENNE
RELATIF A LA DEMANDE DE BREVET EUROPEEN NO.**

EP 25 21 9292

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-04-2026

| Document brevet cité au rapport de recherche | | Date de publication | Membre(s) de la famille de brevet(s) | | Date de publication |
|---|---|---|---|---|---|
| GB 2619934 | A | 27-12-2023 | AUCUN | | |
| GB 892494 | A | 28-03-1962 | AUCUN | | |
| EP 3233711 | B1 | 31-10-2018 | AU | 2015340664 A1 | 25-05-2017 |
| | | | BR | 112017008775 A2 | 02-01-2018 |
| | | | CA | 2966245 A1 | 06-05-2016 |
| | | | CN | 107074264 A | 18-08-2017 |
| | | | EP | 3233711 A1 | 25-10-2017 |
| | | | ES | 2708326 T3 | 09-04-2019 |
| | | | GB | 2531778 A | 04-05-2016 |
| | | | PL | 3233711 T3 | 28-06-2019 |
| | | | TR | 201901278 T4 | 21-02-2019 |
| | | | US | 2017334695 A1 | 23-11-2017 |
| | | | WO | 2016066658 A1 | 06-05-2016 |
| GB 2286806 | A | 30-08-1995 | AUCUN | | |
| US 2022194465 | A1 | 23-06-2022 | DE | 102019109995 A1 | 22-10-2020 |
| | | | EP | 3956253 A1 | 23-02-2022 |
| | | | ES | 2987735 T3 | 18-11-2024 |
| | | | PL | 3956253 T3 | 04-11-2024 |
| | | | US | 2022194465 A1 | 23-06-2022 |
| | | | WO | 2020212028 A1 | 22-10-2020 |
| CN 113697727 | A | 26-11-2021 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2619934 A